Europäisches Patentamt

European Patent Office

Office européen des brevets

(19)

Veröffentlichungsnummer: **0 285 065**

**A1**

# EUROPÄISCHE PATENTANMELDUNG

Anmeldenummer: **88104980.3**

Int. Cl.⁴ **A01D 46/02**

Anmeldetag: **28.03.88**

Priorität: **01.04.87 CS 2273/87**

Veröffentlichungstag der Anmeldung:
**05.10.88 Patentblatt 88/40**

Benannte Vertragsstaaten:
**BE DE FR GB**

Anmelder: **AGROZET KONCERN
ZEMEDELSKEHO STROJIRENSTVI
Sumavska 31
Brno(CS)**

Erfinder: **Albrecht, Zbynek, Dipl. Ing.
Netusilova 1
Prostejov(CS)**

Vertreter: **Patentanwälte Beetz sen. - Beetz
jun. Timpe - Siegfried - Schmitt-Fumian-
Mayr
Steinsdorfstrasse 10
D-8000 München 22(DE)**

(54) **Verfahren und Vorrichtung zur Ernte von Hopfenreben.**

(57) Zur Produktivitätserhöhung einer Erntestraße und Verminderung der Handarbeit werden die Hopfenreben (19) von dem Abschneiden auf dem Hopfengarten bis zum Eintritt in die Pflückmaschine kontrolliert umgestellt. Zur Erhöhung der Funktionszuverlässigkeit werden sie dabei an zuvor unbeschädigten Stengelstellen aufgenommen. Ein umstellbarer Rotationsspeicher (12) ist wechselweise mit dem Zugmittel (1), dem Transportmittel und einem Zwischenspeicher anschließbar, welcher vor dem Eintritt eines Dosierförderers angeordnet ist.

FIG. 1

EP 0 285 065 A1

## Verfahren und Vorrichtung zur Ernte von Hopfenreben

Die Erfindung betrifft ein Verfahren zur Ernte von Hopfenreben, deren unteren Enden nach dem Abschneiden von den Wurzeln durch den Schrägförderer aufgenommen und in einen Niederreißförderer übergegeben werden, durch welchen sie niedergerissen und in das Beförderungsmittel für ihre Beförderung zur Pflückmaschine eingelegt werden. Ferner betrifft die Erfindung eine Vorrichtung zur Ernte von Hopfenreben, einschließend ein Zugmittel, welches mit einer Schneidevorrichtung und mit einem Schrägförderer versehen ist, sowie ein Beförderungsmittel für die Beförderung von Hopfenreben zum Dosierungsförderer der Pflückmaschine.

Bis jetzt wird die Ernte und der Transport von Hopfenreben zur Pflückmaschine weitgehend von Erntearbeitern manuell durchgeführt. Die Reben werden von Hand niedergerissen und auf Karren oder einfachen Transportwagen zur stationären Hopfenpflückmaschine gefahren, in deren Einlaufeinrichtung sie einzeln von Hand eingehängt werden.

Die Handarbeiten sind monoton und anstrengend, insbesondere das Niederreißen der Hopfenreben von ihren Halterungen. Ferner werden durch die langsamen Lade-und Entladevorgänge Transportmittel gebunden. Weitere Nachteile liegen in verhältnismäßig langen Wartezeiten der Transportmittel, in ihrem notwendigen An-und Abkuppeln an Zugmittel und in der damit verbundenen erhöhten Gefahr von Betriebsunfällen.

Es ist auch ein Verfahren zum Abschneiden und Niederreißen von Hopfenreben mittels einer am Schlepper montierten Einrichtung bekannt, welche selbsttätig die Hopfenreben abschneidet und niederreißt und sie auf das Transportmittel legt. Die Hopfenreben werden jedoch auf den Transportwagen ungeordnet aufgeladen, was Anlaß zu Beschädigungen beim Transport und beim Entladen ist. Ferner müssen die Hopfenreben von Hand entladen und vereinzelt in die Rebenaufhängung der ortsfesten Erntestraße eingehängt werden. Ferner sind die Nachteile der Wartezeiten und Kuppelvorgänge nach wie vor notwendig.

Schließlich sind auch Transportmittel mit eigenen Entladeförderern bekannt, mit denen die Reben mechanisch ausgeschoben werden, so daß die Wartezeiten bei diesen kombinierten Transportmitteln am Pflückplatz verkürzt werden. Nachteilig sind jedoch die erheblichen Beschädigungen der wertvollen Pflanzenteile und das nach wie vor notwendige manuelle Einhängen der vereinzelten Hopfenreben in den Einlaufförderer der Pflückmaschine.

Beim Stand der Technik werden die Reben einzeln und von Hand in einfache Einrichtungen eingehängt, welche die Reben in die Pflückmaschine geradlinig und ohne die Möglichkeit einer Sammlung fördern und einlegen. Die Arbeitsleistung dieser Straßen ist demzufolge von der Leistung der Arbeiter beim Einhängen der Reben direkt abhängig. Bei leistungsfähigeren Straßen werden die Reben in eine automatische Transportbahn vereinzelt eingehängt, welche auch eine gewisse Akkumulation vor der Pflückmaschine sicherstellt, was die Arbeitsleistung und die Arbeitsstetigkeit der Erntestraße erhöht. Der Nachteil dieser kombinierten Bahnen liegt aber in ihren wesentlich höheren Erzeugungskosten und in der begrenzten Möglichkeit der Rebenakkumulation bzw. Zwischenspeicherung vor der Pflückmaschine.

Ein gemeinsamer Nachteil aller bekannter Verfahren und Einrichtungen liegt in den umfangreichen und mühsamen Handarbeiten beim Vereinzeln und Einhängen der Reben in die Erntestraße, wobei der Arbeitsaufwand beim Einhängen von der Art und den Eigenschaften des Ernteguts bestimmt wird. Gleichzeitig müssen die eingehängten Reben in der Pflückmaschine von Hand sorgfältig ausgerichtet werden.

Die Aufgabe der Erfindung liegt in der Beseitigung der Nachteile und Mängel der bekannten Verfahren und Einrichtungen, insbesondere in einer wesentlichen Verminderung der Handarbeit beim Niederreißen, beim Transport und besonders bei der Aufhängung der Hopfenreben in die ortsfesten Erntestraßen, in der Verminderung der Wartezeiten der Transportmittel vor der Pflückmaschine, in einer verbesserten Rebenakkumulation vor der Pflückmaschine und schließlich in verringerten Verlusten und Beschädigungen der geernteten Hopfenreben.

Das Wesen des erfindungsgemäßen Verfahrens liegt darin, daß die Hopfenreben vom Abschneiden bis zum Eintritt in die Pflückmaschine an einer unbeschädigten Stengelstelle gehaltert werden, welche von der Schnittstelle beabstandet ist und nach dem Niederreißen von einem umstellbaren Rotationsspeicher aufgenommen und zu einem längsschraubenförmigen Bündel zusammengedreht werden, das nach der Beförderung zur Pflückmaschine in eine senkrecht hängende Stellung umgestellt wird. Die aufgenommenen Hopfenreben werden dann vom Rotationsspeicher aufgedreht und einzeln fortlaufend gelöst übergegeben und durch einen Dosierförderer der Pflückmaschine aufgenommen.

Besonders vorteilhaft ist die Stetigkeit der Ernte-und Handhabungsvorgänge und ihr automatisierter Ablauf, wobei die Teilungen bzw. Abstände der Aufnahmestellen der Hopfenreben von der Abschneidephase bis zur Übergabe an den Dosierförderer von Phase zu Phase kleiner werden. Im Dosierförderer sind die Abstände der Hopfenreben gegenüber dem Rotationsspeicher wieder vergrößert und zwar entsprechend der Pflückleistung der Pflückmaschine. Das Verhältnis der Geschwindigkeit von Hopfenreben im Rotationsspeicher zu den Geschwindigkeiten im Schrägförderer und im Niederreißförderer kann erfindungsgemäß verändert werden. Auch das Verhältnis der Geschwindigkeit der Hopfenreben im Rotationsspeicher zur Geschwindigkeit im Dosierspeicher kann je nach gegebenen Bedingungen auf optimale Werte eingestellt werden.

Bei der erfindungsgemäßen Ernteanlage ist das den Schrägförderer tragende Zugmittel zur Halterung und zum Antrieb eines umstellbaren Rotationsspeichers von Hopfenreben ausgebildet, wobei das Transportmittel eine Halterung zum Anbau des Rotationsspeichers mit horizontaler Achse aufweist, und dem Eintrittsteil des Dosierförderers ein Zwischenspeicher vorgeordnet ist, welcher zur Aufnahme des Rotationsspeichers mit senkrechter Achse, bzw. mit in der Versorgungs-und Stillsetzungsstellung ausgerichteter Achse, für seinen Antrieb gestaltet ist.

Zur Erzielung eines zuverlässigen Erntebetriebs und zur Senkung der Rebenbeschädigungen und Verluste ist es vorteilhaft, die Einmündung des umstellbaren Rotationsspeichers oberhalb des Ausgangs seines vorgeordneten Förderers anzuordnen und den Einlauf des Dosierförderers in den Zwischenspeicher unter dem Niveau der Mündung des Rotationsspeichers zu positionieren.

Weitere zur schonenden Manipulation der Hopfenreben und zur Ersparung von Arbeitskräften beitragende Merkmale liegen darin, daß das Zugmittel mit einer Vorrichtung zur Befestigung des Rotationsspeichers und mit dem Antriebsglied für dessen Antrieb versehen ist, daß auch das Transportmittel Fanghaken zur Befestigung des Rotationsspeichers aufweist und daß der Zwischenspeicher mit eigenen Fangeinrichtungen zur Befestigung des Rotationsspeichers sowie mit einem Drehantrieb für den Rotationsspeicher versehen ist.

Im Hinblick auf eine Optimierung des Arbeitsregimes bei der Ernte ist der Schrägförderer am Zugmittel schwenkbar und horizontal-sowie vertikalverstellbar angeordnet.

Der Vorderteil des Schrägförderers ist in mechanischem Eingriff mit der Hebevorrichtung des Zugmittels und zwischen dem Vorderteil des Schrägförderers und dem Zugmittel ist ein Hydraulikzylinder vorgesehen.

Das Verfahren und die Vorrichtung gemäß der Erfindung gewährleisten eine hohe Qualität des geernteten Substrates und eine kontinuierliche Arbeit der Erntestraße und vermindern wesentlich den Anteil an Handarbeit bei der Ernte. Da das Umspannen der Transportmittel wegfällt, wird die Arbeitssicherheit des Bedienungspersonals der Erntestraße erhöht.

Die Anordnung des Zwischenspeichers vor der Pflückmaschine ermöglicht eine gezielte Akkumulation und einen Ausgleich der Schwankungen der Arbeitsleistung der mobilen und der stationären Bestandteile der Ernteanlage, was die Arbeitskontinuität der Erntestraße wesentlich verbessert.

Die selbsttätige Rebendosierung in die Pflückmaschine wird gemäß der Erfindung genau in einer umgekehrten Reihenfolge wie die Rebeneinlegung in den Rotationsspeicher durchgeführt, was eine kontinuierliche und schonende Entnahme der Hopfenreben und ihre kontinuierliche Dosierung ohne Rücksicht auf die Art und die Eigenschaften des geernteten Hopfens sicherstellt.

Die Montage des Drehspeichers und die vertikal hängende Lage der Rebenbündel im Zwischenspeicher bewirkt außer der Akkumulation, d. h. der Bildung einer bestimmten Reserve, auch eine günstige Positionierung der Reben auf kleinstem Raum vor der Pflückmaschine und führt zu einer Kostensenkung für die Erntestraße.

Aufgrund der schonenden Behandlung der Hopfenreben während aller Handhabungsvorgänge in allen Erntephasen werden Beschädigungen und Verluste des Produktes vermieden. Da auch keine Bodenkontakte des Ernteguts vorkommen, sind auch Verschmutzungen des Ernteguts mit unerwünschten organischen oder anorganischen Beimengungen unmöglich, was die Qualität des geernteten Produktes weiter erhöht.

Das durch die Erfindung zahlenmäßig verringerte Personal wird beim Ausüben der schweren physischen und monotonen Arbeiten entlastet und kann sich auf die optimale Bedienung, Einstellung und die Funktionsüberwachung der Einrichtung konzentrieren.

Die Erfindung wird im folgenden anhand eines bevorzugten Ausführungsbeispiels unter Bezugnahme auf die Zeichnung ausführlich beschrieben. Es zeigen:

Fig. 1 ein Zug-und Transportmittel bei der Arbeit in einem Hopfengarten in schematischer Seitenansicht,

Fig. 2 die Kombi-Einrichtung nach Fig. 1 in Draufsicht,

Fig. 3 eine schematische Seitenansicht der Kombi-Einrichtung nach Fig. 1 in der Transportstellung,

Fig. 4 die Kombi-Einrichtung nach Fig. 1 und 3 in Draufsicht,

Fig. 5, 6 in Seitenansicht und in Draufsicht einen Zwischenspeicher mit nachgeordnetem Dosierförderer,

Fig. 7 in Seitenansicht das Zugmittel mit verstellanordnung für den Schrägförderer,

Fig. 8 eine Stirnansicht der Einrichtung nach Fig. 7,

Fig. 9 bis 17 schematisch die verschiedenen Erntephasen.

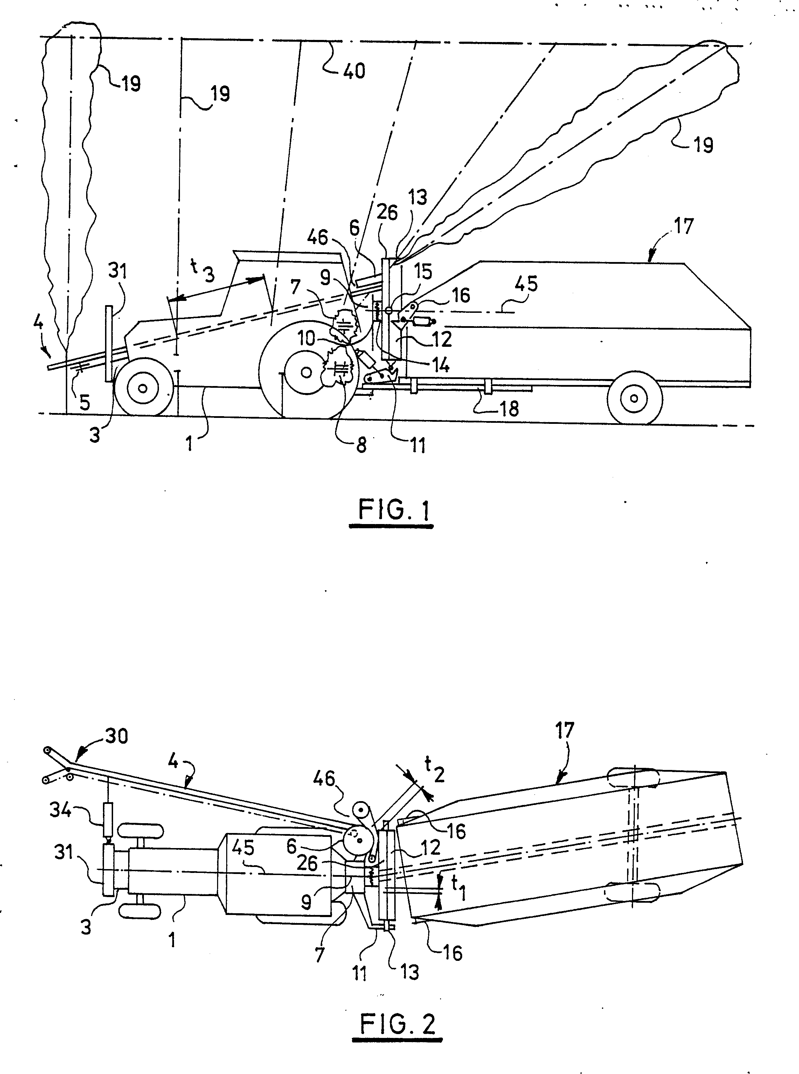

Gemäß Fig. 1 und 2 ist auf einem Zugmittel 1, z. B. einem Schlepper, ein Schrägförderer 4 mit einer vorderen Schneidvorrichtung 5 an einem Rahmen 4 montiert und mittels einer Hebevorrichtung 31 höhenverstellbar. Am Rahmen 3 ist auch ein Niederreißförderer 6 befestigt. Ein Rädergetriebe 7 steht mit einer Ausgangswelle 8 des Zugmittels 1 in Antriebsverbindung. Bei einer anderen Anordnung wird das Rädergetriebe 7 von einem Hydromotor angetrieben. Das Rädergetriebe 7 weist auf der Ausgangswelle 9 ein Antriebsglied 10 mit z. B. Mitnahmeklauen auf.

In der ersten Arbeitsphase im Hopfengarten gemäß Fig. 1 und 2 ist auf dem Rahmen 3 oder auf dem Rädergetriebe 7 mittels einer hydromechanischen Verriegelung 11 ein umstellbarer Rotationsspeicher 12 für die Hopfenreben 19 mit einer Halterung 13 montiert. Das Antriebsglied 10, z. B. die gegenüberliegenden Mitnahmeklauen, befinden sich in Eingriff mit einem angetriebenen Gegenglied 14, z. B. mit Mitnahmeklauen, das auf einer Hauptwelle 15 des Rotationsspeichers 12 gleichachsig angeordnet ist. In dieser ersten Arbeitsstellung sind die am Transportmittel 17 untergebrachten Fanghaken 16 gelöst, der längenverstellbare Rahmen 18 des Transportmittels 17 ist in seine gekürzte Stellung eingestellt und die Achse 45 des Rotationsspeichers 12 verläuft im wesentlichen horizontal.

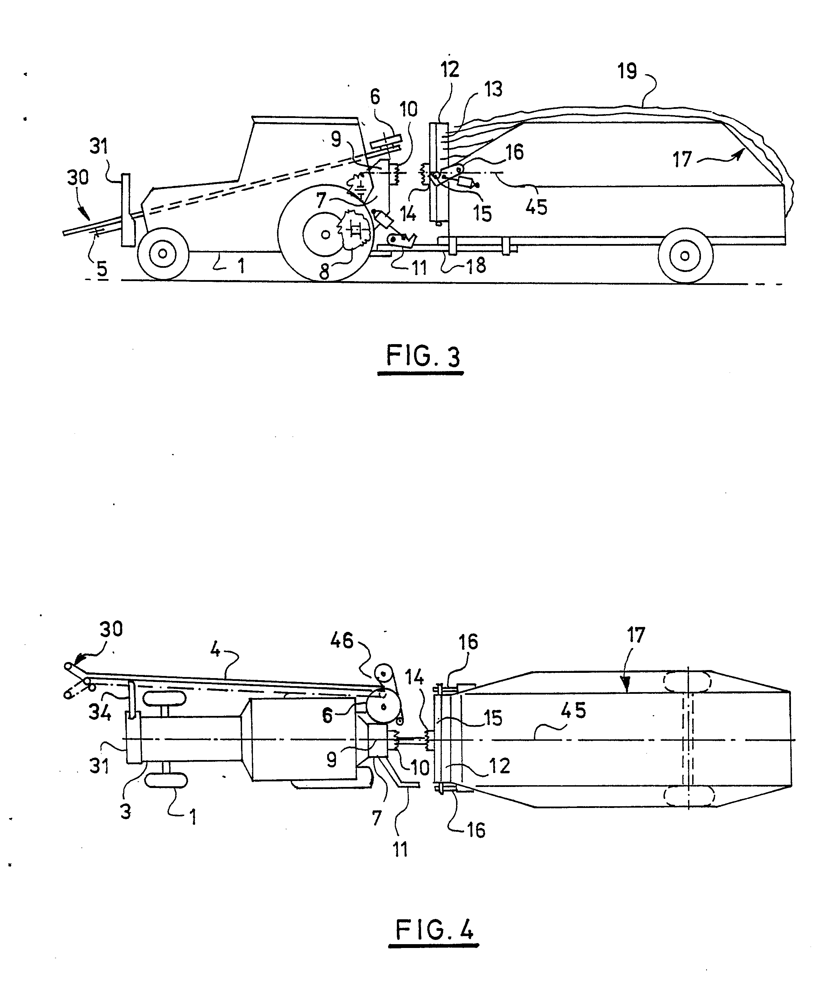

In der Transportphase gemäß Fig. 3 und 4 fährt der gefüllte oder leere Transportwagen 17 auf Verkehrswegen. Dabei ist der Rotationsspeicher 12 durch die Fanghaken 16 an der Stirn des Transportwagens 17 angeschlossen, das angetriebene Gegenglied 14 auf der Hauptwelle 15 des Rotationsspeichers 12 ist von dem Antriebsglied 10 gelöst, die Spannvorrichtung ist ausgeschaltet und der längeneinstellbare Rahmen 18 des Transportwagens 17 ist in seine verlängerte Stellung eingestellt.

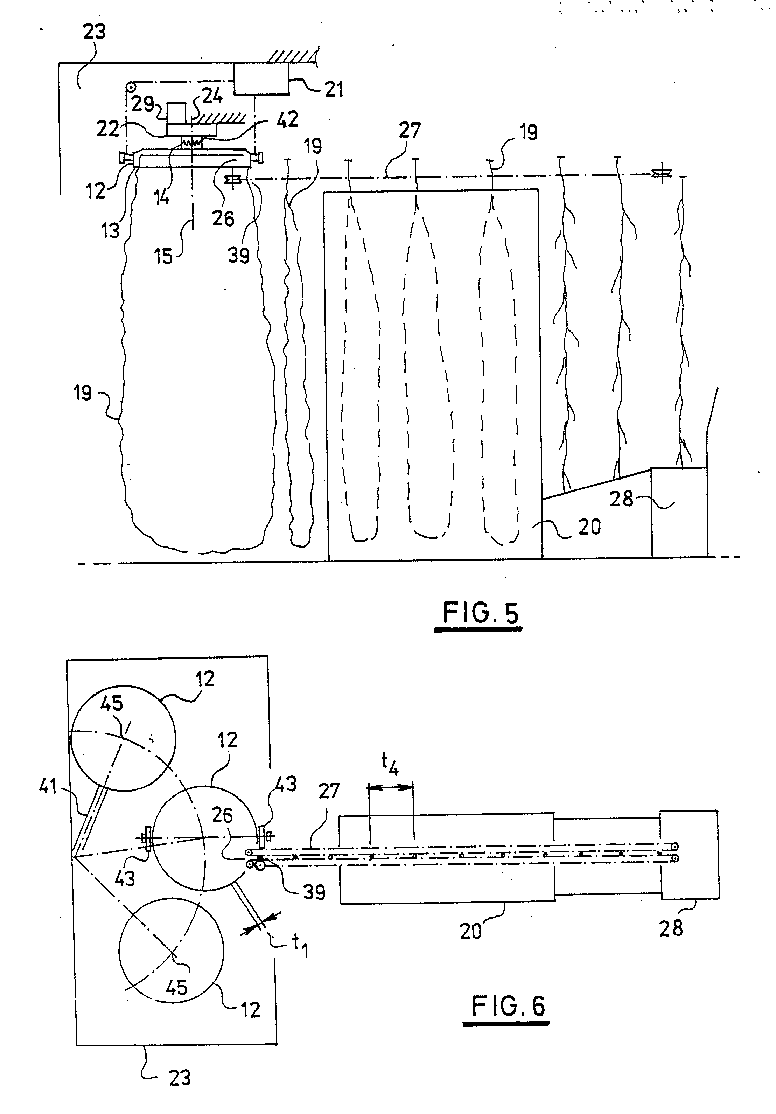

In der weiteren Arbeitsstellung gemäß Fig. 5 und 6 werden die Hopfendolden in einer Pflückmaschine 20 von den Hopfenreben 19 gepflückt. Der Rotationsspeicher 12 mit den von der Halteeinrichtung 13 gehaltenen Hopfenreben 19 ist über ein Hebezeug 21 an eine Tragkonstruktion 22 mit einem Motor 29 angeschlossen, die im Oberteil des Zwischenspeichers 23 so untergebracht ist, daß die Hauptwelle 15 mit der senkrechten Welle 24 der Antriebsvorrichtung 22 gleichachsig ist und das angetriebene Gegenglied 14 in Eingriff mit Mitnehmerklauen 42 an der senkrechten Welle 24 steht.

Die Halterung des Rotationsspeichers 12 erfolgt durch Fangeinrichtungen 43.

In dieser Arbeitsstellung hängen die mit ihren Stengeln in der Halteeinrichtung 13 des Rotationsspeichers 12 verankerten Hopfenreben 19 in der senkrechten Position frei.

An die Mündung 26 des Rotationsspeichers 12, welche in dieser Stellung den Ausgang der Hopfenreben 19 darstellt, schließt der Eintrittsteil 39 eines Dosierförderers 27 an, der die nicht gepflückten Hopfenreben 19 in die Pflück maschine 20 und die gepflückten Hopfenreben 19 in eine Rebenhäckselmaschine 28 fördert.

Nach Fig. 6 sind im Zwischenspeicher 23 außer einem gerade entleerten Rotationsspeicher 12 noch weitere Rotationsspeicher 12 mit den Hopfenreben 19 als Reserve vorgesehen, was die Arbeitskontinuität der Erntestraße sicherstellt. Gleichzeitig können im Zwischenspeicher 23 ein oder mehrere schon entleerte Rotationsspeicher 12 verankert sein, welche zum Rückeinsatz auf den Transportwagen 17 vorbereitet sind.

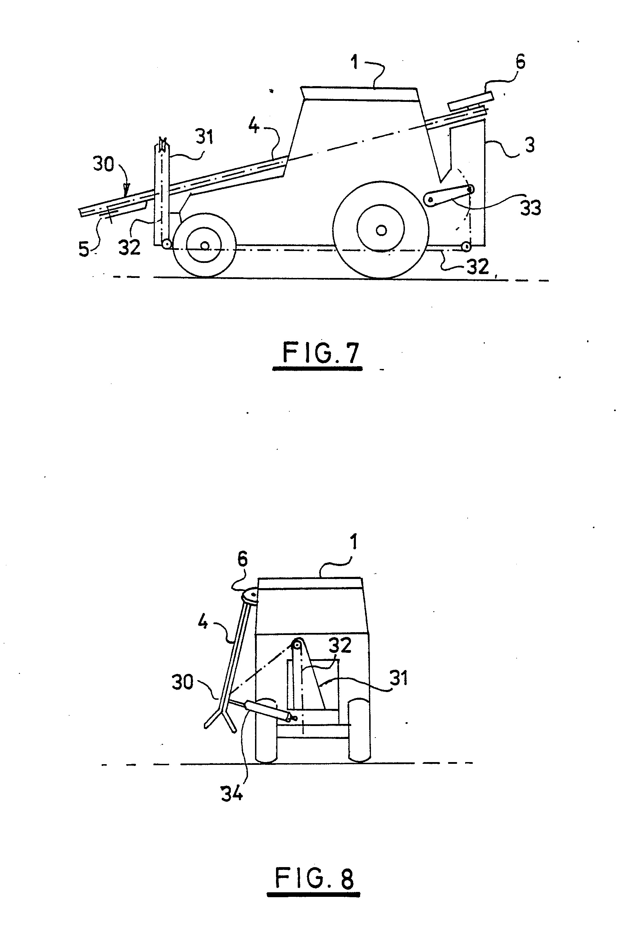

Wie aus Fig. 7 und 8 ersichtlich, ist der Schrägförderer mit seinem Vorderteil 30 an der vertikal verstellbaren Hebevorrichtung 31 gehalten, die einen am Schlepper 1 montierten Schwenkheber 33 und ein Seil 32 aufweist. Ein vom Fahrer steuerbarer Hydraulikzylinder 34 ist am Vorderteil 30 des Schrägförderers 4 und am Vorderteil des Zugmittels 1 zum seitlichen Einstellen des Schneidorgans vorgesehen.

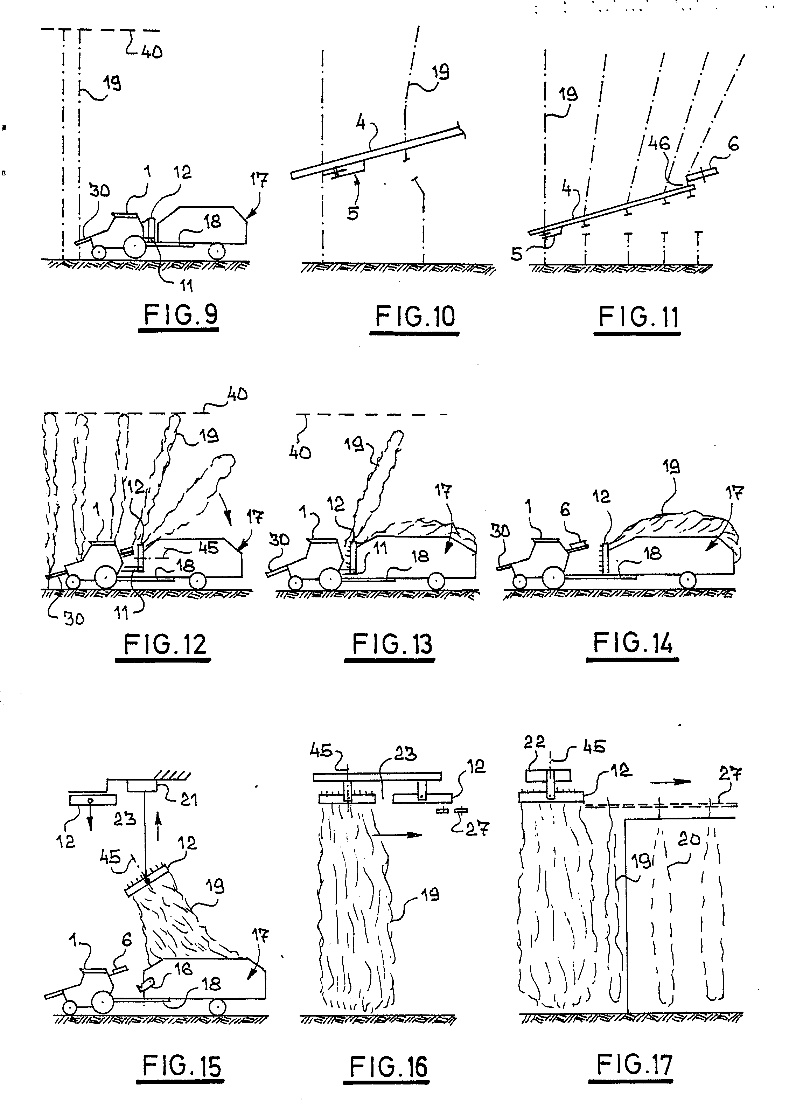

Das erfindungsgemäße verfahren samt der Funktion der Einrichtung für das Abschneiden, für das Niederreißen, für die Förderung und für das Dosieren der Hopfenreben in die Pflückmaschine ist in den Fig. 9 bis 17 dargestellt.

Nach der Ankunft der mobilen Garnitur, d. h. des Zugmittels 1 mit dem Schrägförderer 4, dem Niederreißförderer 6, dem umstellbaren Rotationsspeicher 12 und dem Transportwagen 17 wird die Garnitur in die annähernd gerade Richtung ausgerichtet und der Rahmen 18 des Transportwagens 17 in die verkürzte Stellung eingestellt. Der Rotationsspeicher 12 wird nach Lösen der Fanghaken 16 mittels der Spannvor richtung 11 und der Kupplung 10, 14 an das Zugmittel 1 angeschlossen. Der Vorderteil 30 des Schrägförderers 4 wird mittels des Hydraulikzylinders 34 und der Hebevorrichtung 31 auf die geerntete Produktreihe eingestellt. Diese Situation zeigt Fig. 9.

Die Hopfenrebe 19 wird nach dem Ingangsetzen der Garnitur durch die Schneidvorrichtung 5 abgeschnitten und das abgeschnittene Ende der Hopfenrebe 19 wird vom Schrägförderer 4 aufgenommen, siehe Fig. 10.

Der abgeschnittene Teil der Hopfenrebe 19 wird vom Schrägförderer 4 in die Nähe des Niederreißförderers 6 befördert, während der Oberteil der Hopfenrebe 19 auf dem Drahtnetz 40 befestigt bleibt, siehe Fig. 11.

Vor dem Lösen der Hopfenrebe 19 vom Schrägförderer 4 ist die Hopfenrebe 19 durch den Niederreißförderer 6 fest aufgenommen, dessen Eingang 46 über dem Niveau des Ausgangs der verklemmten Hopfenrebe 19 aus dem Schrägförderer 4 liegt, wobei die Geschwindigkeit des Niederreißförderers 6 in Fahrtrichtung wesentlich kleiner als die Arbeitsgeschwindigkeit der Garnitur ist. Als Folge dieses Geschwindigkeitsunterschiedes kommt es zum Abreißen des Oberteils der Hopfenrebe 19 von dem Drahtnetz 40 und zum freien Fall der abgerissenen Reben auf den Transportwagen 17, siehe Fig. 12. Die Angriffs-und Aufnahmestelle am Stengel der Hopfenrebe 19 durch den Niederreißförderer 6 liegt oberhalb der Klemmstelle der vorhergehenden Klemmung durch den Schrägförderer 4, wodurch eine feste und zuverlässige Halterung der Hopfenrebe 19 sichergestellt ist.

Nach dem Abreißen der Hopfenrebe 19 wird ihr Stengel von der Halteeinrichtung 13 des Rotationsspeichers 12 aufgenommen und unmittelbar darauf vom Niederreißförderer 6 gelöst, siehe Fig. 13. Da der Ausgang des Niederreißförderers 6 unter der Mündung 26 des Rotationsspeichers 12 angeordnet ist, wird die Hopfenrebe 19 von der Halteeinrichtung 13 wieder an einer neuen unbeschädigten höheren Stengelstelle gehaltert, was wiederum eine feste und zuverlässige Fixierung der Hopfenrebe 19 sicherstellt. Im Verlauf des Niederreißens von weiteren Hopfenreben 19 bleiben alle früher abgerissenen Hopfenreben 19 in der Halteeinrichtung 13 des Rotationsspeichers 12 verankert, wobei die Hopfenreben 19 auf dem Transportwagen 17 als Folge der Rotation des Rotationsspeichers 12 bei seiner Füllung zu einem schraubenlinienförmigen Bündel aufgedreht werden.

Nach der Beladung des Rotationsspeichers 12 und Ausrichtung der Garnitur in die annähernd gerade Richtung wird durch die Fanghaken 16 der Rotationsspeicher 12 am Transportwagen 17 angekuppelt und durch Entkuppeln der Spannvorrichtung 11 vom Zugmittel 1 gelöst. Der Rahmen 18 des Transportmittels 17 wird in die verlängerte Stellung umgestellt, siehe Fig. 14. Dadurch wird der Abstand des Rotationsspeichers 12 und des Transportwagens 17 mit den Hopfenreben 19 vom Zugmittel 1 vergrößert und das Antriebsglied 10 vom angetriebenen Gegenglied 14 abgekuppelt, wonach die Garnitur für die Fahrt auf Verkehrswegen zur Pflückmaschine 20 vorbereitet ist.

Nach der Ankunft der Garnitur zu der ortsfesten Straße in den Raum des Zwischenspeichers 23 wird nach Lösen der Fanghaken 16 die Hebevorrichtung 21 betätigt, mit welcher der Rotationsspeicher 12 mit dem Bündel der Hopfenreben 19 in den Zwischenspeicher 23 gehoben wird, siehe Fig. 15.

Nach der Sicherung des beladenen Rotationsspeichers 12 im Zwischenspeicher 23 wird ein bereits geleerter Rotationsspeicher 12 mittels der Hebevorrichtung 21 auf den leeren Transportwagen 17 aus dem Zwischenspeicher 23 gesenkt und in die Fanghaken 16 befestigt. Nach diesem Austausch des vollen gegen einen leeren Rotationsspeicher 12, fährt die Garnitur zum Hopfengarten zurück.

Die vollen Rotationsspeicher 12 mit den frei hängenden Hopfenreben 19 warten in dem Zwischenspeicher 23 - Fig. 16 - auf die Entleerung des vorhergehenden Rotationsspeichers 12. Nach Lösen dieses vorhergehenden abtrennbaren Rotationsspeichers 12 wird der folgende beladene Rotationsspeicher 12 von der Umstelleinrichtung 41 in die Nähe der Pflückmaschine 20 bewegt, in der seine Hauptwelle 15 mit der senkrechten Welle 24 der Antriebsvorrichtung 22 gleichachsig ist. Dadurch befindet sich seine Mündung 26 über dem Eintrittsteil 39 des Dosierförderers 27.

Durch Einschalten des Motors 29 werden der Rotationsspeicher 12 und der Dosierförderer 27 in Tätigkeit gesetzt, siehe Fig. 17. Die bis zu dieser Zeit in der Halteeinrichtung 13 des Rotationsspeichers 12 fest verankerten Hopfenreben 19 werden als Folge der abgeleiteten Bewegung fortschreitend aus ihrer Verankerung gelöst und vereinzelt an den Dosierförderer 27 selbsttätig übergeben. Der Dosierförderer 27 transportiert sie in die Pflückmaschine 20, in der die Dolden von den Hopfenreben 19 abgepflückt werden, und weiter in die Häckselmaschine 28. Vorteilhaft werden die Hopfenreben 19 vom Dosierförderer 27 an einer bisher nicht geklemmten, unbeschädigten Stengelstelle erfaßt, was mit Rücksicht auf die Zuverlässigkeit des Transports wichtig ist. Nach der Entleerung des Rotationsspeichers 12 durch seine Rückdrehung wird er von der Umstelleinrichtung 41 in eine der in Fig. 6 dargestellten seitlichen Wartestellungen bewegt, woraufhin sich der ganze Zyklus wiederholt.

Zur Anpassung des beschriebenen Verfahrens und der Einrichtung an die wechselnden Erntebedingungen, d. h. an die geernteten Abarten, den Ertrag, den Zustand, den Habitus und den Reifegrad des Produkts, wird die Arbeitsgeschwindigkeit der mobilen Garnitur bei der Ernte von Hopfenreben 19 entsprechend gewählt und vom Fahrer wird die Schneidanordnung in zwei Ebenen des Vorderteils 30 des Schrägförderers 4 eingestellt. Für die Sicherstellung der richtigen Einrichtungsfunktion gilt: $t_1 < t_2 < t_3$ für das Regime, bei dem der Schrägförderer 4, der Niederreißförderer 6 und der angekuppelte gefüllte Rotationsspeicher 12 im Betrieb sind, und $t_1 \leq t_4$ für das Regime, bei dem der in den Zwischenspeicher 23 entleerte Rotationsspeicher 12 und der angekuppelte Dosierförderer 27 im Betrieb sind, wobei t₁ die Teilung der Hopfenreben 19 im Rotationsspeicher 12, t₂ die Teilung der Hopfenreben 19 im Niederreißförderer 6, t₃ die Teilung der Hopfenreben 19 im Schrägförderer 4 und t₄ die Teilung der Hopfenreben 19 im Dosierförderer 27 sind.

Durch Änderung des Übersetzungsverhältnisses zwischen der Arbeitsgeschwindigkeit des Schrägförderers 4 und des Rotationsspeichers 12 können die Teilung t₁ der Hopfenreben 19 in der Halteeinrichtung 13 des Rotationsspeichers 12 bei seiner Füllung und auch die Zahl der Hopfenreben 19 im Rotationsspeicher 12 eingestellt werden und durch Änderung seiner Arbeitsgeschwindigkeit bei seiner Entleerung und durch die Änderung der Arbeitsgeschwindigkeit des Dosierförderers 27 ist es möglich, die Arbeitsleistung der Pflückmaschine 20 an die Sorte, den Zustand und die Reife des geernteten Produktes anzupassen.

Dabei gilt der Grundsatz, daß die Hopfenreben 19 von der Abschneidung bis zum Eintritt in die Pflückmaschine 20 jeweils an einer vorher unbeschädigten Stelle des Stengels festgehalten werden, welche aufeinanderfolgend - bei jeder weiteren Aufnahme - von der Schnittstelle weiter entfernt ist.

Die in senkrecht hängender Stellung vom Rotationsspeicher 12 im Raum des Zwischenspeichers 23 gehaltenen Hopfenreben 19 können bei Bedarf klimatisiert werden, z. B. durch Befeuchten, Belüften u. ä. Dadurch werden günstige Voraussetzungen für die Verbesserung der Arbeitsqualität der Pflückmaschine 20 und der folgenden Separation des Produktes von den Abfällen erzielt.

Das beschriebene Verfahren und die Einrichtung sind auch für die Ernte von anderen Produkten, besonders von größeren Abmessungen, geeignet, welche vor der weiteren Verarbeitung transportiert und eventuell auch kurzfristig gelagert werden. Ferner ist die Erfindung nicht auf das vorstehend beschriebene Ausführungsbeispiel beschränkt, sondern umfaßt auch verfahrenstechnische und konstruktive Abänderungen. So können verschiedene Typen von Transportwagen, z. B. mit wannenförmigem Laderaum und gelenkten Achsen, sowie Rotationsspeicher mit einer unbestimmten Anzahl an Klemmstellen für die Rebenstengel am Außenumfang verwendet werden.

## Ansprüche

1. Verfahren zur Ernte von Hopfenreben, deren untere Enden nach dem Abschneiden von einem Schrägförderer aufgenommen und in einen Niederreißförderer übergegeben werden, von dem sie vom Gerüst abgerissen und in einen Transportwagen zur Beförderung zu der Pflückmaschine eingelegt werden,

**dadurch gekennzeichnet,**

daß die Hopfenreben nach dem Niederreißen von einem umstellbaren Rotationsspeicher aufgenommen und in ein schraubenförmiges Bündel zusammengedreht werden, das nach dem Transport zur Pflückmaschine in eine senkrechte Stellung umgestellt wird, woraufhin die Hopfenreben aus dem Rotationsspeicher einzeln gelöst und an einen Dosierförderer der Pflückmaschine übergeben werden.

2. Verfahren nach Anspruch 1,
dadurch gekennzeichnet,
daß die Rebenstengel bei jedem Übergang zu einer neuen Handhabungsphase an einem neuen noch unbeschädigten Abschnitt erfaßt werden, der vorteilhaft von der Schnittstelle weiter entfernt liegt.

3. Verfahren nach Anspruch 1 oder 2,
dadurch gekennzeichnet,
daß die Teilungen der Hopfenreben von der Abschneidphase zur Aufnahmephase in den Rotationsspeicher von Phase zu Phase kleiner werden, während sie in der Durchgangsphase durch den Dosierförderer gegenüber der Aufnahmephase im Rotationsspeicher größer sind.

4. Verfahren nach Anspruch 1, 2 oder 3,
dadurch gekennzeichnet,
daß das Verhältnis der Geschwindigkeit von Hopfenreben im Rotationsspeicher zu ihrer Geschwindigkeit im Schrägförderer und im Niederreißförderer veränderbar ist.

5. Verfahren nach einem der Ansprüche 1 bis 4,
dadurch gekennzeichnet,
daß das Verhältnis der Geschwindigkeit von Hopfenreben in dem umstellbaren Rotationsspeicher zu ihrer Geschwindigkeit in dem Dosierspeicher veränderbar ist.

6. Verfahren nach einem der Ansprüche 1 bis 5,
dadurch gekennzeichnet,
daß die gebündelten Hopfenreben zusammen mit ihrem jeweiligen Rotationsspeicher vor ihrer Übergabe an den Dosierförderer unter Einhaltung optimaler Bedingungen in frei hängender Position zwischengespeichert werden.

7. Vorrichtung zur Hopfenernte mit einem Zugmittel, welches eine Schneidvorrichtung und einen Schrägförderer aufweist, sowie mit einem Transportmittel für die Beförderung der Hopfenreben zum Dosierförderer einer stationären Pflückmaschine,

**dadurch gekennzeichnet,**

daß an das Zugmittel (1) ein umstellbarer Rotationsspeicher (12) für Hopfenreben anbaubar ist,

daß das Transportmittel (17) Halterungen für den Rotationsspeicher (12) mit horizontaler Speicherachse (45) aufweist und

daß vor dem Dosierförderer (27) ein Zwischenspeicher (23) für gegebenenfalls mehrere Rotationsspeicher (12) mit senkrechter Speicherachse (45) und ein Hebezeug (21) vorgesehen ist.

8. Vorrichtung nach Anspruch 7,
dadurch gekennzeichnet,
daß der Eingang (46) des Niederreißförderers (6) und die Einmündung (26) des Rotationsspeichers (12) über dem Niveau der Ausgänge des jeweils vorgeordneten Förderers (4, 6) liegt und daß der Eintrittsteil (39) des Dosierförderers (27) in dem Zwischenspeicher (23) unter dem Niveau der Ausmündung (47) des Rotationsspeichers (12) liegt.

9. Vorrichtung nach Anspruch 7 oder 8,
dadurch gekennzeichnet,
daß das Zugmittel (1) eine Spannvorrichtung (11) für die Hochkant-Befestigung des Rotationsspeichers (12) und ein Antriebsglied (10) für seinen Drehantrieb aufweist, daß das Transportmittel (17) Fanghaken (16) für die Hochkant-Befestigung des Rotationsspeichers (12) besitzt und daß der Zwischenspeicher (23) Fangeinrichtungen (43) für die Horizontal-Befestigung des Rotationsspeichers (12) und einen Antriebsausgang (42) für seinen Drehantrieb enthält.

10. Vorrichtung nach einem der Ansprüche 7 bis 9,
dadurch gekennzeichnet,
daß der Schrägförderer (4) mit seinem Hinterende schwenkbar und mit seinem Vorderteil horizontal und vertikal einstellbar am Zugmittel (1) angeordnet ist.

11. Vorrichtung nach Anspruch 10,
dadurch gekennzeichnet,
daß der Vorderteil des Schrägförderers (4) in mechanischem Eingriff mit einer Hebeeinrichtung (33) des Zugmittels (1) ist und daß zwischen dem Vorderteil des Schrägförderers (4) und dem Zugmittel (1) ein Hydraulikzylinder (34) angeordnet ist.

12. Vorrichtung nach einem der Ansprüche 7 bis 11,
dadurch gekennzeichnet,
daß der Zwischenspeicher (23) mehrere Speicherplätze für volle und leere Rotationsspeicher (12) sowie eine Antriebsvorrichtung zur Bewegung des Rotationsspeichers (12) vom seitlichen Speicherplatz zur Übergabeposition vor dem Dosierförderer (27) aufweist.

FIG. 1

FIG. 2

FIG. 3

FIG. 4

FIG. 5

FIG. 6

0 285 065

FIG.7

FIG. 8

0 285 065

FIG.9

FIG.10

FIG.11

FIG.12

FIG.13

FIG.14

FIG.15

FIG.16

FIG.17

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-1 582 909  (WOLF STAHLBAU KG) <br> * Ansprüche 1,2 * <br> --- | 1,7 | A 01 D   46/02 |
| A | DE-A-2 237 320  (WOLF STAHLBAU KG) <br> * Anspruch 1 * <br> --- | 1,7 | |
| A | DE-A-2 446 707  (AGROSTROJ PROSTEJOV N.P.) <br> * Ansprüche 1,7 * <br> --- | 1,7 | |
| A | DE-U-8 419 960  (J. SOLLER et al.) <br> * Anspruch 1 * <br> ----- | 1,7 | |

RECHERCHIERTE
SACHGEBIETE (Int. Cl.4)

A 01 D   46/00

Der vorliegende Recherchenbericht wurde für alle Patentansprüche erstellt

| Recherchenort | Abschlußdatum der Recherche | Prüfer |
|---|---|---|
| BERLIN | 24-06-1988 | SAMWEL P.N. |